# EUROPEAN PATENT SPECIFICATION

(11) **EP 1 947 803 B1**
(45) Date of publication and mention of the grant of the patent: **19.07.2017**
(21) Application number: 07001298.4
(22) Date of filing: 22.01.2007
(51) Int. Cl.: H04L 12/24, H04L 12/64

(54) **OPERATION OF NETWORK ENTITIES IN A COMMUNICATIONS SYSTEM**
BETRIEB VON NETZWERKEINHEITEN IN EINEM KOMMUNIKATIONSSYSTEM
FONCTIONNEMENT D'ENTITÉS DE RÉSEAU DANS UN SYSTÈME DE COMMUNICATION

(43) Date of publication of application: 23.07.2008
(73) Proprietor: Nokia Solutions and Networks GmbH & Co. KG, 81541 Munich (DE)
(72) Inventor: Pollakowski, Olaf, Dr., 10629 Berlin (DE); Sanneck, Henning, Dr., 81669 München (DE)
(74) Representative: Nokia Corporation

(56) References cited:
- EP-A- 1 392 079
- EP-A- 1 727 316
- WO-A-2006/070197
- DINESH MOHAN NORTEL NETWORKS ALI SAJASSI CISCO SYSTEMS SHAHRAM DAVARI PMC SIERRA NORM FINN CISCO SYSTEMS VASILE RADOACA NORTEL NET: "VPLS OAM Requirements and Framework" IETF STANDARD-WORKING-DRAFT, INTERNET ENGINEERING TASK FORCE, IETF, CH, July 2004 (2004-07), pages 1-15, XP015032623 ISSN: 0000-0004

## Description

### FIELD OF THE INVENTION

The present invention relates to a method of operating network entities in a communications system, in particular in a communications system comprising a management network with at least one hierarchical level for the management of the communications system. Additionally, the present invention relates to a computer program implementing the above mentioned method. Further, the present invention relates to an interface in a communications system configured to implement exchange of operation and maintenance related data, and to the use of such an interface. Furthermore, the present invention relates to network entities in a communications system exchanging operation and maintenance functionality related data.

### BACKGROUND OF THE INVENTION

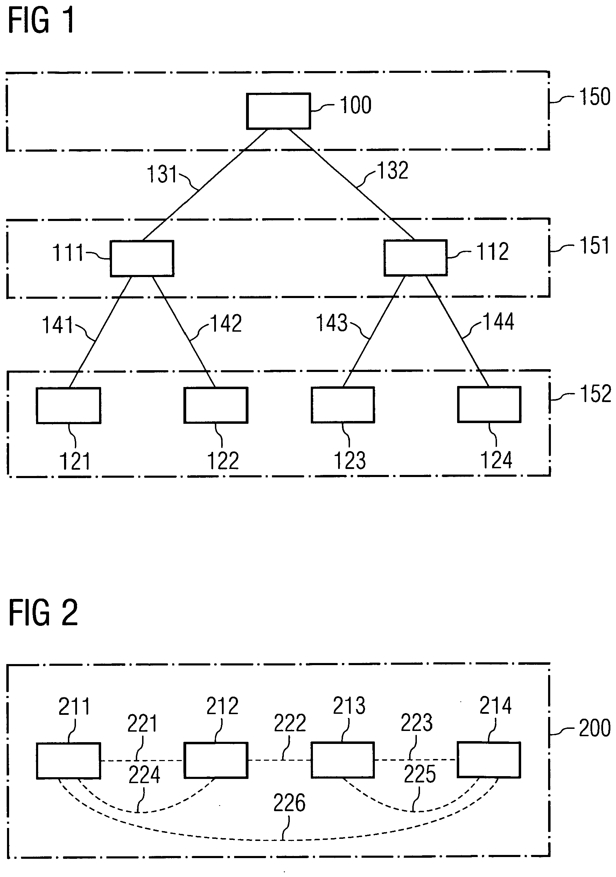

According to the principles of a network management system, a typical management of a communications system, for example, of a telecommunications system, comprises several hierarchical levels for the management of the communications system. Hierarchical level of a management network means that every level in the management network of the communications system has a certain management and/or communications system specific functionality specific for this level, and that, depending on its hierarchical position in the network, it performs a certain management function. Each of these hierarchical levels, with the exception to the top level and the first-line level, has a double management function - manager function and agent function. Each hierarchical level, with the exception of the first-line level, has a manager function with regard to the underlying level, and every hierarchical level, with the exception of the top level, has an agent function with regard to the level before. Thus, a management of a communications system features a hierarchical structure clearly defining the functions at every hierarchical level of this communications system or of the management network of the communications system respectively. See an example provided in Fig. 1 representing three levels of a hierarchical management structure in a telecommunications system and described below.

Each level comprises corresponding entities or elements being of physical and/or abstract nature. Thus, an entity of a hierarchical level can be a software and/or hardware (device) in a communications system. In the following, such entities or elements will be referred to as "network entities". Depending on the level of the management network performing a functionality of a manager or an agent, or both, these network entities are managers, agents, or both. In the following, the terms manager or agent will be used in dependence of the functionality of the corresponding hierarchical level and, thus, in dependence of the corresponding network entity of this hierarchical level. For this reason, if a level represents both the management and the agent level, a network entity comprised in this hierarchical level will be a manager or an agent depending on the function to be performed in a given moment by this network entity.

Network management as such refers to the Operation, Administration, and Maintenance (OAM) of communications systems or networks like telecommunications networks at the top level. Network management is the execution of a variety of functions required for controlling, planning, allocating, deploying, coordinating, and/or monitoring the resources of a network, including performing functions such as initial network planning, frequency allocation, predetermined traffic routing to support load balancing, cryptographic key distribution authorization, configuration management, fault management, security management, performance management, bandwidth management, and/or accounting management. Further, in such a management system hardware and/or software are provided that support OAM functionality and provide these functions, for example, to network users and/or administrators. Thus, OAM includes facilities for operating, managing and maintaining networks.

Managers in a communications network are configured to start operations for the operation, administration and maintenance of the communications network. It is done by sending requests, which are performed by the agents, in particular, by the agents assigned to the corresponding managers. The managers receive then corresponding feedbacks, called responses, from the agents.

Network entities implementing the functionality of an agent in the communications network recognize events relevant for the operation, administration and maintenance of the communications network (e.g. alarms), generate corresponding notifications, and transmit these notifications, usually as event reports, to the managers, in particular, to the managers the network entities are assigned to. Thus, an efficient network management is enabled.

The provision of OAM functionality is assured by communication between the hierarchical levels of the management network of the communications system, wherein the network entities of an upper level manage the network entities of the underlying level to ensure a correct performance of the OAM functionality and the managed network entities act depending on the management of the upper management level. Further, in the management network of the communications system a strict assignment exists between managers and agents. A manager has a certain set of agents it has to manage. Agents, in turn, are assigned to one manager. Thus, the performance and safeguarding of the OAM functionality is done in a strict hierarchical way between the levels of the management network of the communications system.

The communication between the hierarchical levels of a management network of a communications system and thus between the managers and the agents is usually facilitated by management interfaces, called OAM interfaces. The implementation of these interfaces can be preformed, for example, by appliance of protocols like Simple Network Management Protocol (SNMP), Transaction Language 1 (TL1), Extensible Markup Language (XML), or Common Object Request Broker Architecture (CORBA).

When managing network entities of the first-line level or one of the upper levels, due to hierarchical character of the management structure, this management is performed by at least one of the upper levels via OAM systems and/or corresponding OAM interfaces respectively. Thus, typical OAM functionality concerning the network entities of the first-line level or one of the upper levels like fault and/or performance management (FM, PM) or configuration of the network entities to maintain consistency of the communications network are performed by the network entities of the upper levels, wherein a well coordinated information post processing and correlation has to be performed by the corresponding managers and a well coordination of the responsible managers has to be done. To ensure a stable and errorless performance of OAM functionality, often human network operators have to be involved into the management processes. In such cases, a human network operator has to be able to manage and overlook a variety of data concerning a variety of network entities. Thereby, the conventional implementation of OAM functionality requires a frequent intervention and a regular monitoring and control by human operators being a very complex task. Thus, conventional implementation of OAM functionality has the disadvantage of a low degree of automation.

Further, an OAM system with conventional implementation of OAM functionality has large processing requirements, as a large number of alarms and high amount of further OAM functionality relevant data (like fault, performance, or configuration data) has to be exchanged. This heavy data traffic, in turn, causes requirements of high network bandwidth.

As already outlined above, a conventional OAM system is designed by several hierarchical levels of a management network of a communications system, for example, of a telecommunications system. Fig. 1 represents three hierarchical levels of a management network of a telecommunications system.

At the first line level 152, the management network of a telecommunications system consists of network elements (NEs) 121, 122, 123, and 124. In the following, this hierarchical level 152 will be referred to as the "NE level". A network element (NE) 121, 122, 123, 124 is a kind of telecommunications (hardware) equipment or element that is addressable and manageable. NE can also be seen as a combination of hardware and software or a network entity comprising software that primarily performs telecommunications service functions or predefined and a priori agreed upon functions and, thus, provides support or services to users, for example. NEs 121, 122, 123, 124 are interconnected and managed through at least one Element Manager System (EMS) 111, 112 comprised in the upper management level 151, which will be referred to as the "EMS level" in the following. The NE level 152 performs the agent functionality, and the EMS level 151, in turn, performs a manager functionality with regard to the NE level 152 and an agent functionality with regard to the upper level 150 in the hierarchy of the management network.

An EMS 111, 112 is a manager of one or more of a specific type of NEs 121, 122, 123, 124 and allows to manage all the features of each NE 121, 122, 123, 124 individually. Each of the NEs 121, 122, 123, 124 is connected to one responsible and managing EMS 111, 112 via appropriate links. The communication between the NE level 152 and the EMS level 151 and thus between the NEs 121, 122, 123, 124 and the EMS 111, 112 is ensured by management interfaces 141, 142, 143, 144, like EMS/NE Operation and Maintenance (OAM) interfaces, implemented on the links between the NE and EMS level 152, 151. Such connections between the EMS and NEs are called also "southbound" connections.

EMS 111, 112, in turn, are managed by an Operations Support System (OSS) 100 of the top level 150, in the following referred to as the "OSS level". The OSS 100 monitors the underlying management layers 151, 152 and predominantly looks at functional and non-functional requirements of the communications system and of the underlying layers 131, 132. The OSS level 150 performs just a manager function with regard to the underlying EMS level 151. The communication between the OSS level 150 and the EMS level 151 or the OSS 100 and the EMS 111, 112 respectively is enabled by links between the two levels, wherein management interfaces 131, 132, for example EMS / OAM interfaces, are implemented on these links for this purpose. The connections or links between the OSS level 150 and EMS level 151 are also known as "northbound" connections.

As already outlined above, the OAM functionality in the management network of the telecommunications system as represented in Fig. 1 is performed by providing OAM relevant data from the lower levels to the upper levels, where OAM relevant decisions are made, and the results of the decisions are then transmitted from the upper levels back to the lower levels.

In the following, the problems occurring in relation with such an implementation of the OAM functionality will be presented by a closer discussion of two OAM functions - the Fault and Performance Management (FM, PM) and the configuration of the telecommunications system or the network entities respectively.

In a telecommunications system, all network entities, for example NEs 121, 122, 123, 124, have to be configured to become operational. As already pointed out above, such a configuration is normally done via OAM systems or functionality respectively. In some cases the same data sets need to be configured in more than one network entity. These data sets have to be configured consistently at start up of the system and have to be maintained consistent after this when the communications system is operating.

In order to maintain consistency the configuration data sets in the NE 121, 122, 123, or 124 have to be transferred to the OAM system, where the consistency is checked, and modified data has to be transferred back to the NE121, 122, 123, or 124. This process is time consuming and the data transfer requires network bandwidth. Furthermore, because all data and its processing is concentrated at the OAM system, there, enough processing and network bandwidth needs to be available. Thus, the OAM system can be seen as a bottleneck of the safekeeping of the operation and maintenance requirements in a telecommunications system.

The relation between the consistent data sets can be classified into two types: Master-Slave-Relationship and Peer-to-Peer-Relationship.

In Master-Slave-Relationship, one data set is the master and the other data set is only the slave being dependent on the master. There, consistency of the configuration data sets is maintained by propagating configuration changes from the master data set to the slave data set. Thus, changes in the communications system are propagated only in one direction. An example for a Master-Slave-Relationship can be provided by a handover in a cellular telecommunications system.

In Peer-to-Peer-Relationship, in turn, no division in master or slave data set is performed, both data sets can be changed. Configuration changes have to be propagated from the one to the other data set. Thus, in this case changes are propagated in both directions. An example for a Peer-to-Peer-Relationship can be provided by link termination points in a cellular telecommunications system.

In a conventional telecommunications system as presented by Fig. 1, the consistency of these data sets is assured at the EMS and/or at the OSS level 150, 151. At the EMS level 151, consistency can be assured only for the NEs managed by the managing EMS, typically the NEs of a single vendor. In Fig. 1, the consistency of NEs 121, 122 is assured by the EMS 111, and the consistency of NEs 123, 124 is assured by the EMS 112. At the OSS level 150, in turn, consistency can be assured between NEs attached to different EMS. In Fig. 1, the consistency of NEs 121, 122, 123, and 124 attached to the EMS 111 and 112 is assured by the OMS 110.

Alternatively, an interface allowing a direct exchange of consistency related information between several EMS has been standardized in the 3rd Generation Partnership Project (3GPP).

However, maintaining consistency according to the conventional methodology provides disadvantages as already pointed out above. Thus, the conventional methodology represents a network bandwidth and data traffic consuming process. Additionally, this process is also rather a manual process with just few automated steps as either an human operator has to initiate corrective actions manually or to provide himself a system to assist him this task.

When considering further management functionalities to be performed, the fault management (FM) and/or the performance management (PM) have to be assured in a communication system. When faults, for example, impair the operation of a network entity, the network operator must be informed. In such cases, the network operator requires data on the performance of the live network to detect potential problems and verify that service level agreements with customers are met. As already mentioned above, such FM and/or PM is usually done via OAM systems that are connected with special interfaces to the network entities.

Because a managed network domain typically consists of numerous NEs, for example, the "raw" fault and performance data emitted by the individual NEs or individual NE subsystems needs to be post-processed to become useful for the network operator. For FM, individual alarms need to be correlated to be able to find the "root cause" of a problem. In PM, individual counters need to be aggregated to Key Performance Indicators (KPIs) which are computed on an intra network element (intra-NE) or inter network element (inter-NE) basis to obtain a network domain performance status.

In order to enable alarm correlation / root cause analysis and KPI computation, FM and PM data have to be transferred to the EMS and/or OSS level 151, 150. At the EMS and/or OSS level 151, 150, the corresponding OMS related data is processed and analyzed. Finally, the configuration of NEs 121, 122, 123, 124 may be changed according to the results of the analysis. Like the configuration process or function, because of similarities with regard to the implementation, this process is time consuming and the data transfer requires network bandwidth. Thus similar disadvantages appear. At the EMS level 151, analysis and processing can be performed only for the NEs 121, 122, 123, 124 attached to the corresponding EMS 111, 112, typically for NEs of one particular vendor. It is not possible to exchange FM/PM-related data at the EMS level 151. Therefore, the corresponding data is often re-processed at the OSS level 150. Thus, because all data and the processing of this data is concentrated at the OSS level 150, there, enough processing and network bandwidth has to be available. Thus, also here the OSS 100 can be seen as a kind of bottleneck.

Further, network faults and performance problems are typically locally and temporally correlated. Thus, for example, when a network router fails, all topologically adjacent routers which have links to this router notice and report the problem to the OAM system at the same time, or when a network base station fails In a mobile network, the geographically adjacent base stations notice a failure of a neighbouring cell and report the problem to the corresponding OAM system.

Furthermore, according to the conventional operation and maintenance management in a telecommunications system every NE 121, 122, 123, 124 reports individually. This fact provides the disadvantages that a high consumption of network bandwidth and processing power arises, when implementing OAM functionality and that this OAM system is flooded with redundant alarms / performance data. Additionally, due to the centralization of the process, the local context or correlation is lost and has at first to be derived from the data at the EMS / OSS being not always possible.

An other negative aspect is that no information is exchanged between EMS 111, 112 which deal with NEs 121, 122, 123, 124 which have adjacencies. When considering Fig. 1, NE 122 and NE 123 represent such adjacent NEs being managed by EMS 1.11 and EMS 112. There, according to the conventional OAM management EMS 111 and EMS 112 do not exchange any corresponding information or OAM related data (FM and/or PM data) respectively.

These problems were tried to be solved by the aggregation / post-processing of FM and PM data at the EMS and OSS level 151, 150 exclusively. Thus, at the EMS level 151 the processing of FM and/or PM data is done only for the NEs 121, 122, 123, 124 managed by the corresponding EMS 111, 112, typically for the NEs of a single vendor. A processing for NEs 121, 122, 123, 124 attached to different EMS 111, 112 is then performed only at the OSS level 150.

However, also with this slightly improved approach the disadvantages of high network bandwidth requirement because of heavy data traffic needed for transmission of a high number of alarms and huge amount of FM and/or PM data. Additionally, like the configuration task or functionality described above, a human network operator has to be involved in the task of correlating data and, if necessary, in subsequent reconfiguration to ensure a smooth fault and performance management. Thus, also there an automation of the operation and maintenance system or management respectively is required.

The document EP-A-1 727 316 (CIT ALCATEL [FR]), 29 November 2006, describes a method for checking support of a function at network elements of a telecommunication network including a source, a destination and intermediate control plane elements interconnected through a signaling protocol for controlling a source, a destination and intermediate network elements respectively for configuration of a connection from the source to the destination network element crossing the intermediate network elements.

The document EP-A-1 392 079 727 (ALCATEL CANADA INC [CA]), 25 February 2004, describes elements in the network provided with configuration information respecting OAM messages together with connection signaling upon setting up a call through the network.

The document WO 00/19291 (TLEFONAKTIEBOLAGET LM ERICCSSON), HUBINETTE ULF, 6 April 2000, describes a method and system enabling efficient and reliable software distribution by disbursing the responsibility for loading software.

### SUMMARY OF THE INVENTION

It is an object of the present invention to provide an operation of network entities in a communications system which improves the operation and maintenance of a communications system.

This object is achieved by providing a method of operating network entities in a communications system, wherein a first network entity and a second network entity exchange operation and maintenance related data via a communications link connecting said first and said second network entity, wherein said first and second network entities are comprised in one hierarchical level of a management network of said communications system.

Further, this object is achieved by providing an interface in a communications system, wherein said interface is implemented on a communications link connecting two network entities on one hierarchical level of a management network of a communications system, and wherein said interface is configured to exchange operation and maintenance related data between said two network entities via said communications link.

Additionally, this object is achieved by use of the interface outlined above and described below in more detail in the communications system to exchange operation and maintenance related data in said communications system. Furthermore, this object is achieved by a computer program product comprising code means for producing the steps of the above outlined method when run on a computing device. The computer program product can be embodied in a computer-readable medium.

This object is achieved also by a network entity for use in a hierarchical level of a management network of a communications system, wherein said network entity is configured to send operation and maintenance related data to a further network entity in said hierarchical level of said management network of said communications system via a communications link connecting said network entity and said further network entity.

Additionally, this object is achieved by a network entity for use in a hierarchical level of a management network of a communications system, wherein said network entity is configured to receive operation and maintenance related data from a further network entity in said hierarchical level of said management network of said communications system via a communications link connecting said network entity and said further network entity.

According to the present invention, communications links connecting network entities of one hierarchical level in the management network of the communications system are used to enable exchange of OAM related data between these network entities of one level. These communications links are links that are normally carrying traffic of the user plane and control plane or, in other words, traffic related to call processing.

In a conventional communications system, data relevant for OAM functions has to be transferred from the upper management levels, from the agents, to the higher levels, to the mangers, in the worst case, up to the top level. On the upper management level, the OAM relevant data concerning the network entities of the lower levels is post processed and correlated, and after that a decision concerning the OAM is met. Subsequently, corresponding OAM relevant data is reached back to the lower levels. The present invention breaks the strictly hierarchical operation. According to the present invention, the exchange of OAM relevant or related data between network entities is enabled on a lower management network level (which is reached at an earlier stage of operation), and OAM relevant or related decisions can thus be made more directly. The network level may be a level providing an agent functionality. In this manner, the OAM functions can be performed and implemented in a more flexible and efficient way. Further, the whole OAM functionality is simplified by use of the methodology of the present invention, wherein data traffic and bandwidth consumption are reduced and a higher potential for automation is offered.

More particular, the present invention provides the advantage that OAM relevant data can be exchanged and/or synchronised directly between the network entities. The conventional methodology always involves an upload of the OAM relevant data into network entities of upper management levels. After data exchange and/or synchronisation, the post processed and/or correlated data (e.g. semantically compressed data) can be transmitted to upper management levels, only if necessary for the further OAM function implementation. The same applies to the downloading of transmitting of data from the upper management levels to the lower management levels. Also this task is performed only if necessary for the further OAM function implementation. For this reason, the present invention reduces the consumed network bandwidth by the data traffic and reduces the processing requirements of the operation and maintenance of the communications system. Furthermore, a human network operator has to be involved only in case of errors of problems, which cannot be resolved automatically in the local one hierarchical level data exchange.

The degree of automation is higher, when implementing the present invention, due to the distribution of the overall OAM task to smaller tasks running on numerous network entities of the same hierarchical level, i.e., the exchange of the OAM related data can be implemented in the background. Only in case of errors where it may not be clear how to deal with the data, a central entity at an upper management level may be involved. Additionally, available distributed processing resources can be exploited and thus provide further advantages. For example, a computing grid could be exploited additionally, thus providing the ability to perform computations on large data sets, by breaking them down into many smaller ones, or providing the ability to perform many more computations at once than would be possible with a single computing, by modelling a parallel division of labor between processes.

Further, according to the present invention, by using the OAM related data exchanged between the network entities of the same hierarchical level at least one of OAM functions can be implemented. The OAM related data exchange according to the present invention ensures the operation and maintenance of the communications system. In particular, exchange of the OAM functionality is ensured for the network entities involved in the data exchange.

Furthermore, the exchange of OAM related data according to the present invention can be implemented by an OAM interface, which is then implemented on the communications link connecting the network entities between which the OAM related data is exchanged. This OAM interface corresponds to the interface already outlined above. The use of an interface, to implement the OAM related data exchange provides the advantage of exchangeability of components, entities, or modules supporting or using an interface predetermined or standardised for a certain task. These components, entities, or modules are configured to support or use the interface and can be exchanged or replaced, if necessary. Thus, a more flexible handling or the exchange of OAM related data is enabled as the components, entities, or modules are compatible to each other. The components, entities, or modules would be the network entities or communications links as already described, or even other interfaces integrated in the management network of the communications system and/or involved in the OAM functionality.

According to the present invention, the implementation of OAM related data exchange can be done in several ways of implementation. According to one way of implementation, at least one OAM message is added to at least one signalling protocol used via the communications link used for the exchange of the OAM related data according to the present invention. This OAM message comprises the OAM related data to be exchanged between the corresponding network entities. This signalling protocol is a protocol used for processing calls between the network entities via said communications link. A protocol represents a set of rules governing or managing communication between the entities or elements of a communications network. Call processing, in turn, is a method by which calls (e.g. (cellular) telephone calls) are identified and routed through the communications network. It represents the process of routing, originating, terminating the calls, along with the necessary billing and statistical collection processes. This way of implementation provides the advantage, that the OAM functionality is fully integrated and/or implemented into the call processing functions providing a single and powerful implementation for both the OAM functionality and the call processing functionality.

According to a further way of implementation, the exchange of OAM related data is implemented on communications link by using at least one protocol for performing at least one OAM function. The OAM function can be, for example, an exchange of FM and/or PM data, configuration of the corresponding network entities, and/or synchronisation of data of the corresponding network entities. In this case, new OAM protocols could be implemented. Wherein, the new implementation provides the advantage, that the exchange of OAM related data between the network entities of the same management level is specifically designed for these network entities with regard to the requirements specific and important for said network entities. With this way of implementation the OAM functionality could be performed besides the call processing functionality on the communications link, thus providing the advantage of having two separate and flexible functionalities on one communications link.

An another way of implementation according to the present invention is using at least one OAM function for implementing exchange of the OAM related data on communications link. There, existing OAM functions designed to be used on conventional management interfaces outlined above (i.e. management interfaces or OAM interfaces respectively enabling communication between the hierarchical levels of a management network of the communications system) can be used. Thus, no new OAM functions have to be designed, the OAM functions already used for ensuring the operation and maintenance of a communications system can be reused, thus, significantly simplifying and facilitating the actual implementation according to the present invention. Also with this way of implementation the OAM functionality could be performed besides the call processing functionality on the communications link, thus providing the advantage of having two separate and flexible functionalities on one communications link.

Each of the ways of implementation as well combinations thereof can be implemented in the above outlined OAM interface. The OAM interface is then configured to perform the necessary steps of at least one of the ways of implementation. Thus, summarising the OAM related data exchange implementations possible according to the present invention, the OAM interface is configured to add at least one OAM message to the at least one signalling protocol, and/or to use at least one protocol for performing at least one OAM function, and/or to use at least one OAM function to exchange the OAM related data.

For the call processing functionality, a further interface - a call processing interface - responsible for processing calls can be implemented on the communications link. When implementing an OAM related exchange by an interface, according to the first way of implementation, a combined interface responsible for both the OAM functionality and the call processing functionality could be implemented. According to the second and third ways of implementation as outlined above, two interfaces - a OAM interface and a call processing interface - can be implemented on a communications link. There, several implementation combinations are possible and will be apparent to a person skilled in the art. Thus, the present invention provides a high flexibility with regard to the actual way of implementation.

### BRIEF DESCRIPTION OF THE DRAWINGS

The present invention will be more clearly understood from the following description of the preferred embodiments of the invention in conjunction with the attached drawings, in which:
- Fig. 1: shows a design of a conventional OAM system; and
- Fig. 2: shows operating of network entities in one hierarchical level of a management network and the exchange of OAM related data according to present invention.

### DESCRIPTION OF THE PREFERRED EMBODIMENTS

Fig. 2 shows operating of network entities 211, 212, 213, 214 in one hierarchical level 200 of a management network and the exchange of the OAM related data according to an embodiment, wherein the exchange of the OAM related data is implemented on communications links connecting the network entities 211, 212, 213, 214 of one hierarchical level 200. In Fig. 2 these communication links are shown as dashed lines connecting network entities 211, 212, 213, 214 of the hierarchical level 200. As already outlined above, the exchange of the OAM related data can be implemented by OAM interfaces 221, 222, 223, 224, 225, 226 integrated or implemented on the corresponding communications links. The implementation of the data exchange according to the present invention can be done by at least one of the three ways of implementation outlined above, namely by adding at least one OAM message to at least one signalling protocol used on the corresponding communications link connecting at least tow network entities between which the OAM related data has to be exchanged, by using on said communications link at least one protocol for performing at least one operation and maintenance function, and/or by using at least one OAM function for implementing the exchange of the OAM related data on said communications link. Wherein, if using OAM interfaces 221, 222, 223, 224, 225, 226, these interfaces are configured to implement at least one of these ways of implementation, as outlined above.

In following, when explaining the present invention in more detail, the problems occurring in relation with such an implementation of the OAM functionality will be presented by a discussion of two OAM functions - the Fault and Performance Management (FM, PM) and the configuration of the telecommunications system or the network entities respectively. However, a person skilled in the art will be able to implement the present invention also for further OAM functions mentioned and outlined in the introduction part when considering the embodiments corresponding to the two OAM function representatives.

Further, when considering FM and PM or the configuration function, more concrete embodiments will be given in the following for each of the functions. Also here, it has to be pointed out, that a person skilled in the art will be able to implement the present invention also for other more concrete situations in a communications system where OAM functionality is ensured.

When considering FM and/or PM, the exchange of OAM related date corresponds to exchange of data relevant for FM and/or PM in the communications system or telecommunications system respectively, wherein this data is exchanged on communications links connecting network entities of the same hierarchical level, and wherein FM and/or PM is implemented for at least one of the connected network entities. In following, these network entities will be referred to entities of the EMS level 151 or of the NE level 152 presented in Fig. 2.

Thus, when considering FM and/or PM, the exchange of FM and/or PM data is implemented on the communications links connecting the network entities 211, 212, 213, 214 of the hierarchical level 200. Wherein, if using OAM interfaces 221, 222, 223, 224, 225, 226, these interfaces are configured to implement the exchange of FM and/or PM data according to the present invention.

When, implementing the exchange of FM and/or PM data according to the embodiment, alarm notification and PM data management mechanisms can be employed on the corresponding communications link or on the corresponding OAM interface 221, 222, 223, 224, 225, 226, if an OAM interface is used. As already outlined above, for the implementation of the exchange of FM and/or PM data according to the embodiments at least one of the following ways of implementation can be chosen:
Addition of new OAM messages to the signaling protocols thereby fully integrating the logical OAM interface into the call processing functions;
Usage of new OAM protocols specifically designed for the described exchange of the FM and/or PM related data, thereby having two logical interfaces (one for OAM and one for call processing) on the same communications link;
Usage of existing OAM functions designed to be used on conventional OAM management interfaces (i.e., EMS / NE OAM or EMS / EMS OAM interfaces), e.g. 3GPP defined Integration Reference Point (IRP) interfaces, thereby also having two logically separated interfaces on the same communications link.

The exchange of FM and/or PM related data enables a network entity 211, 212, 213, 214 like a NE to do at least parts of the aggregation / post-processing which so far has been done only at the EMS and/or OSS level 151, 150. To enable a meaningful alarm correlation / KPI computation, some coordination between the NE 211, 212, 213, 214 is required. Typically, there is no master-slave relationship in the data, i.e., all NE involved in FM and/or PM are a-priori equally responsible to report a fault and/or performance problem. Therefore a coordination mechanism is needed which designates the particular NE 211, 212, 213, 214 which collects the alarms or FM related data respectively and/or PM related data, does the processing and sends the required information to the OAM system. Known mechanisms for this coordination like electing a "cluster head" for a cluster of network entities or NEs respectively can be applied here.

When considering the EMS level 151 as being the level 200, the EMS 211, 212, 213, 214 can exchange the OAM related data also via conventional EMS / EMS OAM interfaces. In a conventional management network of a (tele-)communications system the corresponding links or connections, on which the conventional EMS / EMS OAM interfaces are implemented, are also known as "west-/eastbound" connections.

The main idea is to move OAM functionality which anyway deals with locally inter-related FM and PM data between NEs to the appropriate interfaces which are closer to the respective source, thereby simplifying the OAM process, reducing data traffic and bandwidth consumption and offering a higher potential for automation. This includes moving the OAM functionality from the OSS- to the EMS-level using an inter-EMS interface and moving functionality down into the network (i.e. to the NEs themselves). Which interface is actually used for exchanging the data (inter-EMS, inter-NE or a combination) depends on the particular use case.

When using a communications link connecting NEs 211, 212, 213, 213 or an inter-NE interface 221, 222, 223, 224, 225, 226 implemented on the corresponding communications link, advantages of the methodology according to the embodiments are that FM and/or PM related data is exchanged directly between the network elements and only post-processed (i.e., semantically compressed) data is then transmitted to the EMS and/or OSS. Conventional solutions always involve an upload of the "raw" data into the Element Managers or even into the OSS. For this reason the methodology according to the embodiments reduces the consumed network bandwidth by the data traffic and reduces the processing requirements of the OAM system (reduction of number of alarms or amount of FM related data and/or amount of PM related data). Further, the human network operator only has to be involved in the task of correlating data (and subsequent reconfiguration) in case of errors which cannot be resolved automatically in the local inter-NE data exchange. Furthermore, local changes in the configuration between NE can trigger the corresponding FM and/or PM related data correlation without involving the centralized OAM system. Thus a high degree of automation and fast detection of problems is possible. Additionally, the FM and/or PM related data correlation can trigger a local reconfiguration. Such a reconfiguration would be much faster than a centrally-controlled reconfiguration.

A further advantage is that due to the distribution of the overall task to the smaller tasks running on the numerous NEs, the degree of automation is higher, i.e., typically the exchange of FM and/or PM related data runs in the background. Only in case of errors where it may not be clear how to correlate and/or aggregate this data, a central entity at the EMS and/or OSS may be involved in the post-processing and/or correlation task.

Furthermore, available distributed processing resources can be exploited (like in a computing grid), as already pointed out above.

The advantages of using an inter-EMS interface in a EMS level 200, 151 according to the embodiments are similar to the ones described above for an exemplary exploited inter-NE interface. Here, however only the interactions between the EMS- and OSS-levels 151, 150 are covered, i.e., the OSS-level 150 does not need to be involved at all or only in a minor way than before. This results in a reduction of processing requirements and workload for the operator at the OSS-level 150.

When looking for more concrete embodiments concerning more concretized network entities with regard to the FM and/or PM, the new network architecture in 3GPP, as currently standardized (Long Term Evolution, System Architecture Evolution) can be considered exemplary. When taking radio base stations called "eNodeBs" as network entities, the direct interface X2 featured in this architecture between the radio base stations can be used for the FM and/or PM related data exchange according to the embodiments.

Due to the geographical adjacencies, FM and/or PM related data may correlate significantly between different eNodeBs. The X2 interface can thus be used for exchanging FM and/or PM data between adjacent eNodeBs.

A further more concrete embodiment concerns Radio Network Controllers (RNCs) in a mobile communications system as network entities of one hierarchical level. The current network architecture of 3GPP provides an lur link between different RNCs. Alarms or fault data respectively and/or performance data may be related to adjacent cells represented by different RNCs. The lur link could hence be used to exchange inter-related alarms and performance data according to the embodiments.

In an another embodiment RNCs and Mobile Switching Centers (MSCs) in a mobile communications system as network entities of one hierarchical level. In the current 3GPP network architecture lu links exist between a RNC and a MSC for communications purposes. Certain cell related data sets are held in both the RNC and the MSC. Exchange of FM and/or PM data according to the embodiments can then be done over the lu link.

In the following embodiment, element managers are the network entities of the same hierarchical level. The current 3GPP network management architecture has a management interface between Element Managers. Thus, the management interface between Element Managers can be used for the OAM related data exchange according to the embodiments.

When considering the configuration function, the exchange of OAM related date corresponds to exchange of data relevant for configuration of the communications system or telecommunications system respectively, wherein this data is exchanged on communications links connecting network entities of the same hierarchical level, and wherein the configuration is implemented for at least one of the connected network entities. In following, these network entities will be referred to entities of the EMS level 151 of the NE level 152 presented in Fig. 2.

Thus, when considering the configuration function, the exchange of configuration data or configuration related data is implemented on the communications links connecting the network entities 211, 212, 213, 214 of the hierarchical level 200. Wherein, if using OAM interfaces 221, 222, 223, 224, 225, 226, these interfaces are configured to implement the exchange of configuration data according to the embodiments. Conventional, well known synchronization mechanisms (like, e.g., in Synchronization Markup Language (SyncML)) can then be employed on that interface. Uni-directional sync mechanisms are employed for the master-slave relationship case introduced above. Bidirectional mechanisms are used in the peer-to-peer case.

As already outlined above, for the implementation of the exchange of configuration data according to the embodiments at least one of the following ways of implementation can be chosen, especially when integrating a (logical) OAM interface with the logical user and control plane interfaces on a communications link between NEs:
Addition of new OAM messages to the signalling protocols thereby fully integrating the (logical) OAM interface into the call processing functions;
Usage of new OAM protocols specifically designed for synchronization of data sets of network entities like NEs, thereby having two (logical) interfaces (one for OAM and one for call processing) on the same communications link;
Usage of existing OAM functions designed to be used on conventional management interfaces (i.e., EMS / NE OAM or EMS / OSS OAM interfaces), e. g. 3GPP defined IRPs, thereby also having two logically separated interfaces on the same communications link.

According to the embodiments, the OAM function dealing with the configuration relationships between network entities like NEs is moved down into the network. In this manner, the implementation of the OAM function is simplified, data traffic and bandwidth consumption is reduced, and a higher potential for automation offered, as already pointed out above.

Thus, the configuration according to the embodiments provides the advantage, that the data sets are synchronized directly between the network entities like NEs 211, 212, 213, 214. The conventional configuration always involves an upload of the configuration data into the Element Managers 111, 112 or even into the OSS 100. After the comparison of the data sets and the detection of inconsistencies between the data sets, the data has to be downloaded again into the network entities or NEs. For this reason, the methodology according to the embodiments reduces the consumed network bandwidth by the data traffic and reduces the processing requirements of the OAM system. Further, the human network operator has to be involved in the consistency assurance task only in case of errors which cannot be resolved automatically in the local inter-NE data exchange.

Further, due to the distribution of the overall task to the smaller tasks running on the numerous network entities or NEs, the degree of automation is higher, i.e., typically the exchange of configuration data runs in the background. Only in case of errors where for the NEs it may not be clear how the data should be changed (for the Peer-to-Peer-Relationship case mentioned above), a central entity at the EMS and/or OSS level 151, 150 may be involved. As already pointed out above, additionally, available distributed processing resources can be exploited (like in a computing grid), when implementing the configuration according to the embodiments.

When looking for more concrete embodiments concerning more concretized network entities with regard to the configuration function, the new network architecture in 3GPP, as currently standardized (Long Term Evolution, System Architecture Evolution) can be considered exemplary also for the configuration function. When taking radio base stations called "eNodeBs" as network entities, the direct interface X2 featured in this architecture between the radio base stations can be used for the configuration related data exchange according to the embodiments.

For handover purposes certain cell data held by one eNodeB has to be mirrored to other eNodeBs. The X2 interface can then be used for propagating the changes of the master data set in one eNodeB to the mirror data set in other eNodeBs in compliance with at least one of the ways of implementation pointed out above according to the embodiments.

According to a further embodiment, the lur link, as provided by the 3GPP architecture, between different RNCs can be used for the proposed exchange of configuration data. For handover purposes, cell data held by one RNC has to be mirrored into other RNCs. The lur link could hence be used to maintain the data sets of the RNCs consistent.

According to an another embodiment, the lu link of the 3GPP network architecture connecting a RNC and a MSC can be used for the proposed configuration data exchange. There, the RNC and MSC correspond to the network entities of the same hierarchical level. According to the present embodiment, certain cell related data sets are held in both the RNC and the MSC. Consistency can be maintained by exchanging the configuration related data between the RNC and the MAX via the lu link according to the embodiments.

It is noted that the present invention is not restricted to the above embodiments but can be applied in connection with any communications system comprising a management level with several managing levels and in which the operation and maintenance functionality has to be implemented. The embodiments may thus vary within the scope of the attached claims.

## Claims

1. A method of operating radio base station entities (211, 212, 213, 214) in a mobile communications system, wherein a first radio base station entity (211, 212, 213, 214) and a second radio base station entity (211, 212, 213, 214) exchange operation and maintenance related data via a communications link connecting said first and said second radio base station entity (211, 212, 213, 214), wherein said first and second radio base station entities are comprised in one hierarchical level (200) of a management network of said communications system comprising management and/or communications system specific functions specific for the said one hierarchical level (200), wherein the said communication link carrying traffic of the user plane and control plane wherein the said operation and maintenance related data comprises fault management and/or performance management related data, and wherein an operation and maintenance functionality is integrated and/or implemented into the user plane and control plane functions providing both the operation and maintenance functionality for exchanging the said operation and maintenance related data and the user plane and control plane functionality.

2. A method according to claim 1, wherein at least one operation and maintenance function is implemented by using said operation and maintenance related data.

3. A method according to claim 1 or 2, wherein said method implements an operation and maintenance interface (221, 222, 223, 224, 225, 226) on said communications link, and wherein said exchange of said operation and maintenance related data is implemented by said operation and maintenance interface (221, 222, 223, 224, 225, 226).

4. The method according to any one of the preceding claims, wherein said exchange of said operation and maintenance related data is implemented on said communications link by adding at least one operation and maintenance message to at least one signalling protocol used via said communications link.

5. The method according to claim 4, wherein said at least one signalling protocol is used for processing calls between said first and second radio base station entities via said communications link.

6. The method according to claims 3 and 4 or claims 3 and 5, wherein said operation and maintenance interface (221, 222, 223, 224, 225, 226) implements said adding.

7. The method according to any one of claims 1 - 3, wherein said exchange of said operation and maintenance related data is implemented on said communications link by using at least one protocol for performing at least one operation and maintenance function.

8. The method according to claim 7 and claim 3, wherein said operation and maintenance interface (221, 222, 223, 224, 225, 226) implements said using of said at least one protocol for performing at least one operation and maintenance function.

9. The method according to any one of claims 1 - 3, said method further comprising using said at least one operation and maintenance function for implementing said exchange of said operation and maintenance related data on said communications link.

10. The method according to claim 3 and 9, wherein said operation and maintenance interface (221, 222, 223, 224, 225, 226) implements said using of said at least one operation and maintenance function.

11. The method according to any one of preceding claims, wherein a call processing interface is implemented on said communications link.

12. The method according to any one of the preceding claims, wherein said operation and maintenance related data comprises data related to configuration of radio base station entities in said communications system.

13. The method according to claim 12, wherein a synchronisation of data of at least one of said first and said second radio base station entity (211, 212, 213, 214) is implemented by using said data related to said configuration of radio base station entities (211, 212, 213, 214).

14. The method according to any one of claims 1 - 11, wherein said operation and maintenance related data comprises data relevant for fault and/or performance management of said communications system.

15. The method according to claim 11, wherein fault and performance management is implemented for at least one of said first and second radio base station entity (211, 212, 213, 214) by using said data relevant for said fault and/or performance management.

16. A computer program product comprising code means for producing the steps of the method according to any one of claims 1 - 15 when run on a computing device.

17. The computer program according to claim 1, wherein said computer program is embodied in a computer-readable medium.

18. A radio base station entity (211, 212, 213, 214) for use in one hierarchical level (200) of a management network of a mobile communications system comprising management and/or communications system specific functions specific for the said hierarchical level (200), wherein said radio base station entity (211, 212, 213, 214) is configured to send and to receive operation and maintenance related data to or from a further radio base station entity (211, 212, 213, 214) in the said one hierarchical level (200) of said management network of said mobile communications system via a communications link connecting said radio base station entity (211, 212, 213, 214) and said further radio base station entity (211, 212, 213, 214) and wherein the said communication link carrying traffic of the user plane and control plane the said operation and maintenance related data comprises fault management and/or performance management related data, and wherein an operation and maintenance functionality is integrated and/or implemented into the user plane and control plane functions providing both the operation and maintenance functionality for exchanging the said operation and maintenance related data and the user plane and control plane functionality.

## Patentansprüche

1. Verfahren zum Betreiben von Funkbasisstationseinheiten (211, 212, 213, 214) in einem Mobilkommunikationssystem, wobei eine erste Funkbasisstationseinheit (211, 212, 213, 214) und eine zweite Funkbasisstationseinheit (211, 212, 213, 214) betriebs- und wartungsbezogene Daten über eine die erste und die zweite Funkbasisstationseinheit (211, 212, 213, 214) verbindende Kommunikationsverbindung austauschen, wobei die erste und die zweite Funkbasisstationseinheit in einer hierarchischen Ebene (200) eines Management-Netzwerks des Kommunikationssystems umfasst sind, das management- und/oder kommunikationssystemspezifische Funktionen umfasst, die für die eine hierarchische Ebene (200) spezifisch sind, wobei die Kommunikationsverbindung Datenmengen der Nutzerebene und Steuerungsebene transportiert, wobei die betriebs- und wartungsbezogenen Daten fehlermanagement- und/oder leistungsmanagementbezogene Daten umfassen, und wobei eine Betriebs- und Wartungsfunktionalität in die Nutzerebenen- und Steuerungsebenenfunktionen integriert und/oder implementiert wird, die sowohl die Betriebs- und Wartungsfunktionalität zum Austausch der betriebs- und wartungsbezogenen Daten als auch die Nutzerebenen- und Steuerungsebenenfunktionalität bereitstellen.

2. Verfahren nach Anspruch 1, wobei wenigstens eine Betriebs- und Wartungsfunktion implementiert wird, indem die betriebs- und wartungsbezogenen Daten verwendet werden.

3. Verfahren nach Anspruch 1 oder 2, wobei das Verfahren eine Betriebs- und Wartungsschnittstelle (221, 222, 223, 224, 225, 226) auf der Kommunikationsverbindung implementiert, und wobei der Austausch der betriebs- und wartungsbezogenen Daten von der Betriebs- und Wartungsschnittstelle (221, 222, 223, 224, 225, 226) implementiert wird.

4. Verfahren nach einem der vorhergehenden Ansprüche, wobei der Austausch der betriebs- und wartungsbezogenen Daten auf der Kommunikationsverbindung implementiert wird, indem wenigstens eine Betriebs- und Wartungsnachricht zu wenigstens einem über die Kommunikationsverbindung genutzten Signalisierungsprotokoll hinzugefügt wird.

5. Verfahren nach Anspruch 4, wobei das wenigstens eine Signalisierungsprotokoll zum Verarbeiten von Anrufen zwischen der ersten und zweiten Funkbasisstationseinheit über die Kommunikationsverbindung verwendet wird.

6. Verfahren nach Anspruch 3 und 4 oder Anspruch 3 und 5, wobei die Betriebs- und Wartungsschnittstelle (221, 222, 223, 224, 225, 226) das Hinzufügen implementiert.

7. Verfahren nach einem der Ansprüche 1-3, wobei der Austausch der betriebs- und wartungsbezogenen Daten auf der Kommunikationsverbindung implementiert wird, indem wenigstens ein Protokoll zum Ausführen wenigstens einer Betriebs- und Wartungsfunktion implementiert wird.

8. Verfahren nach Anspruch 7 und Anspruch 3, wobei die Betriebs- und Wartungsschnittstelle (221, 222, 223, 224, 225, 226) die Verwendung des wenigstens einen Protokolls zum Ausführen wenigstens einer Betriebs- und Wartungsfunktion implementiert.

9. Verfahren nach einem der Ansprüche 1-3, wobei das Verfahren ferner umfasst, die wenigstens eine Betriebs- und Wartungsfunktion zum Implementieren des Austauschs der betriebs- und wartungsbezogenen Daten auf der Kommunikationsverbindung zu verwenden.

10. Verfahren nach Anspruch 3 und 9, wobei die Betriebs- und Wartungsschnittstelle (221, 222, 223, 224, 225, 226) die Verwendung der wenigstens einen Betriebs- und Wartungsfunktion implementiert.

11. Verfahren nach einem der vorhergehenden Ansprüche, wobei eine Anrufverarbeitungsschnittstelle auf der Kommunikationsverbindung implementiert wird.

12. Verfahren nach einem der vorhergehenden Ansprüche, wobei die betriebs- und wartungsbezogenen Daten Daten umfassen, die sich auf die Konfiguration von Funkbasisstationseinheiten im Kommunikationssystem beziehen.

13. Verfahren nach Anspruch 12, wobei eine Synchronisation von Daten wenigstens einer der ersten und zweiten Funkbasisstationseinheit (211, 212, 213, 214) implementiert wird, indem die Daten, die sich auf die Konfiguration der Funkbasisstationseinheiten (211, 212, 213, 214) beziehen, verwendet werden.

14. Verfahren nach einem der Ansprüche 1-11, wobei die betriebs- und wartungsbezogenen Daten Daten umfassen, die für das Fehler- und/oder Leistungsmanagement des Kommunikationssystems relevant sind.

15. Verfahren nach Anspruch 11, wobei das Fehler- und Leistungsmanagement für wenigstens eine der ersten und zweiten Funkbasisstationseinheit (211, 212, 213, 214) implementiert wird, indem die für das Fehler- und/oder Leistungsmanagement relevanten Daten verwendet werden.

16. Computerprogrammprodukt umfassend Codemittel zum Erzeugen der Schritte des Verfahrens nach einem der Ansprüche 1- 15 wenn es auf einer Rechenvorrichtung ausgeführt wird.

17. Computerprogramm nach Anspruch 1, wobei das Computerprogramm in einem computerlesbaren Medium enthalten ist.

18. Funkbasisstationseinheit (211, 212, 213, 214) zur Verwendung in einer hierarchischen Ebene (200) eines Management-Netzwerks eines Mobilkommunikationssystems umfassend management- und/oder kommunikationssystemspezifische Funktionen, die für die hierarchische Ebene (200) spezifisch sind, wobei die Funkbasisstationseinheit (211, 212, 213, 214) ausgelegt ist, betriebs- und wartungsbezogene Daten an eine weitere oder aus einer weiteren Funkbasisstationseinheit (211, 212, 213, 214) in der einen hierarchischen Ebene (200) des Management-Netzwerks des Mobilkommunikationssystems über eine die Funkbasisstationseinheit (211, 212, 213, 214) und die weitere Funkbasisstationseinheit (211, 212, 213, 214) verbindende Kommunikationsverbindung zu senden und zu empfangen, und wobei die Kommunikationsvorrichtung Datenmengen der Nutzerebene und Steuerungsebene transportiert, wobei die betriebs- und wartungsbezogenen Daten fehlermanagement- und/oder leistungsmanagementbezogene Daten umfassen, und wobei eine Betriebs- und Wartungsfunktionalität in die Nutzerebenen- und Steuerungsebenenfunktionen integriert und/oder implementiert wird, die sowohl die Betriebs- und Wartungsfunktionalität zum Austausch der betriebs- und wartungsbezogenen Daten als auch die Nutzerebenen- und Steuerungsebenenfunktionalität bereitstellen.

## Revendications

1. Procédé de fonctionnement d'entités de station de base radio (211, 212, 213, 214) dans un système de communication mobile, dans lequel une première entité de station de base radio (211, 212, 213, 214) et une seconde entité de station de base radio (211, 212, 213, 214) échangent des données liées à l'exploitation et à la maintenance par le biais d'une liaison de communication reliant ladite première et ladite seconde entité de station de base radio (211, 212, 213, 214), dans lequel lesdites première et seconde entités de station de base radio sont incluses dans un seul niveau hiérarchique (200) d'un réseau de gestion dudit système de communication comprenant des fonctions spécifiques à un système de gestion et/ou de communication qui sont spécifiques pour ledit seul niveau hiérarchique (200), dans lequel ladite liaison de communication supporte un trafic du plan d'utilisateur et du plan de commande dans lequel lesdites données liées à l'exploitation et à la maintenance comprennent des données liées à une gestion des anomalies et/ou à une gestion des performances et dans lequel une fonctionnalité d'exploitation et de maintenance est intégrée et/ou mise en oeuvre dans les fonctions de plan d'utilisateur et de plan de commande fournissant à la fois la fonctionnalité d'exploitation et de maintenance pour échanger lesdites données liées à l'exploitation et à la maintenance et la fonctionnalité de plan d'utilisateur et de plan de commande.

2. Procédé selon la revendication 1, dans lequel au moins une fonction d'exploitation et de maintenance est mise en oeuvre en utilisant lesdites données liées à l'exploitation et à la maintenance.

3. Procédé selon la revendication 1 ou 2, dans lequel ledit procédé met en oeuvre une interface d'exploitation et de maintenance (221, 222, 223, 224, 225, 226) sur ladite liaison de communication et dans lequel ledit échange desdites données liées à l'exploitation et à la maintenance est mis en oeuvre par ladite interface d'exploitation et de maintenance (221, 222, 223, 224, 225, 226).

4. Procédé selon l'une quelconque des revendications précédentes, dans lequel ledit échange desdites données liées à l'exploitation et à la maintenance est mis en oeuvre sur ladite liaison de communication en ajoutant au moins un message d'exploitation et de maintenance à au moins un protocole de signalisation utilisé par le biais de ladite liaison de communication.

5. Procédé selon la revendication 4, dans lequel ledit au moins un protocole de signalisation est utilisé pour traiter des appels entre lesdites première et seconde entités de station de base radio par le biais de ladite liaison de communication.

6. Procédé selon les revendications 3 et 4 ou les revendications 3 et 5, dans lequel ladite interface d'exploitation et de maintenance (221, 222, 223, 224, 225, 226) met en oeuvre ledit ajout.

7. Procédé selon l'une quelconque des revendications 1 à 3, dans lequel ledit échange desdites données liées à l'exploitation et à la maintenance est mis en oeuvre sur ladite liaison de communication en utilisant au moins un protocole pour effectuer au moins une fonction d'exploitation et de maintenance.

8. Procédé selon la revendication 7 et la revendication 3, dans lequel ladite interface d'exploitation et de maintenance (221, 222, 223, 224, 225, 226) met en oeuvre ladite utilisation dudit au moins un protocole pour effectuer au moins une fonction d'exploitation et de maintenance.

9. Procédé selon l'une quelconque des revendications 1 à 3, ledit procédé consistant en outre à utiliser ladite ou lesdites fonctions d'exploitation et de maintenance pour mettre en oeuvre ledit échange desdites données liées à l'exploitation et à la maintenance sur ladite liaison de communication.

10. Procédé selon la revendication 3 et 9, dans lequel ladite interface d'exploitation et de maintenance (221, 222, 223, 224, 225, 226) met en oeuvre ladite utilisation de ladite ou desdites fonctions d'exploitation et de maintenance.

11. Procédé selon l'une quelconque des revendications précédentes, dans lequel une interface de traitement d'appel est mise en oeuvre sur ladite liaison de communication.

12. Procédé selon l'une quelconque des revendications précédentes, dans lequel lesdites données liées à l'exploitation et à la maintenance comprennent des données liées à une configuration d'entités de station de base radio dans ledit système de communication.

13. Procédé selon la revendication 12, dans lequel une synchronisation de données d'au moins l'une desdites première et seconde entités de station de base radio (221, 212, 213, 214) est mise en oeuvre en utilisant lesdites données liées à ladite configuration d'entités de station de base radio (211, 212, 213, 214).

14. Procédé selon l'une quelconque des revendications 1 à 11, dans lequel lesdites données liées à l'exploitation et à la maintenance comprennent des données appropriées pour une gestion des anomalies et/ou des performances dudit système de communication.

15. Procédé selon la revendication 11, dans lequel une gestion des anomalies et des performances est mise en oeuvre pour au moins l'une desdites première et seconde entités de station de base radio (211, 212, 213, 214) en utilisant lesdites données appropriées pour ladite gestion des anomalies et/ou des performances.

16. Produit-programme d'ordinateur comprenant un moyen de code pour produire les étapes du procédé selon l'une quelconque des revendications 1 à 15 lorsqu'il tourne sur un dispositif informatique.

17. Programme informatique selon la revendication 1, dans lequel ledit programme informatique est intégré dans un support lisible par ordinateur.

18. Entité de station de base radio (211, 212, 213, 214) destinée à être utilisée dans un seul niveau hiérarchique (200) d'un réseau de gestion d'un système de communication mobile comprenant des fonctions spécifiques à un système de gestion et/ou de communication qui sont spécifiques pour ledit niveau hiérarchique (200), dans laquelle ladite entité de station de base radio (211, 212, 213, 214) est configurée pour envoyer des données liées à l'exploitation et à la maintenance à une autre entité de station de base radio (211, 212, 213, 214), et pour les recevoir de cette dernière, dans ledit seul niveau hiérarchique (200) dudit réseau de gestion dudit système de communication mobile par le biais d'une liaison de communication reliant ladite entité de station de base radio (211, 212, 213, 214) et ladite autre entité de station de base radio (211, 212, 213, 214) et dans laquelle ladite liaison de communication supporte un trafic du plan d'utilisateur et du plan de commande, lesdites données liées à l'exploitation et à la maintenance comprennent des données liées à une gestion des anomalies et/ou à une gestion des performances et dans laquelle une fonctionnalité d'exploitation et de maintenance est intégrée et/ou mise en oeuvre dans les fonctions de plan d'utilisateur et de plan de commande fournissant à la fois la fonctionnalité d'exploitation et de maintenance pour échanger lesdites données liées à l'exploitation et à la maintenance et la fonctionnalité de plan d'utilisateur et de plan de commande.
